# EUROPÄISCHE PATENTANMELDUNG

(11) **EP 3 757 912 A1**
(43) Veröffentlichungstag der Anmeldung: **30.12.2020**
(21) Anmeldenummer: 19182299.8
(22) Anmeldetag: 25.06.2019
(51) Int. Cl.: G06Q 10/06, G06Q 50/04

(54) **VERFAHREN UND SYSTEM ZUR HERSTELLUNG EINES NEUEN PRODUKTS**

(71) Anmelder: Siemens Aktiengesellschaft, 80333 München (DE)
(72) Erfinder: Haselböck, Alois, 3392 Schönbühel-Aggsbach (AT); Havur, Giray, 1080 Wien (AT)
(74) Vertreter: Maier, Daniel Oliver

(57) **Zusammenfassung**

Verfahren (100) zur Herstellung eines neuen Produkts (4) durch eine Anlage (610) mit Einsatzmitteln unter Verwendung einer optimalen Prozesskette (151), wobei folgende Schritte ausgeführt werden:
a) Ermitteln (110) zumindest eines Ziel-Merkmals (111) für das neue Produkt (4),
b) Erfassen (210) von bereits durchgeführten Prozessketten (400, 410, 420) bei der Herstellung von Produkten (1, 2, 3) durch die Anlage (610),
c) Erzeugen (120) eines zusammengesetzten Prozessketten-Graphs (121) aus dem zumindest einen Ziel-Merkmal (111) und den bereits durchgeführten Prozessketten (400, 410, 420),
d) Erstes Bestimmen (130) von Prozessketten-Lösungs-Kandidaten (131) aus den zusammengesetzten Prozessketten-Graphen (121),
e) Zweites Bestimmen (230) der möglichen Einsatzmittel (231) aus den Prozessketten-Lösungs-Kandidaten (131) und den durchgeführten Prozessketten (400, 410, 420),
f) Drittes Bestimmen (140) der bevorzugten Prozessketten-Lösungen (141) aus den Prozessketten-Lösungs-Kandidaten (131),
g) Erstes Auswählen (150) der optimalen Prozesskette (151) aus den bevorzugten Prozessketten-Lösungen (141),
h) Zweite Auswählen (250) der Einsatzmittel (251) aus der optimalen Prozesskette (151) und den möglichen Einsatzmitteln (231),
i) Herstellen (160) des neuen Produkts (4) durch die Anlage.

## Beschreibung

Die Erfindung betrifft ein Verfahren und ein System zur Herstellung eines neuen Produkts durch eine Anlage mit Einsatzmitteln unter Verwendung einer optimalen Prozesskette.

Fortschritte bei Fertigungstechnologien entwickeln sich heutzutage in Richtung Automatisierung und Flexibilität in intelligenten Fertigungs-Ecosystemen. Die Bedürfnisse der Kunden erfordern zunehmend, dass diese Ecosysteme in der Lage sind, die Produktvariabilität schnell, zuverlässig und kostengünstig zu handhaben und dabei ein hohes Maß an Flexibilität zu gewährleisten.

Ein kritischer Engpass bei der Bewältigung der Produktvariabilität in einer Fabrik ist die manuelle Gestaltung von Herstellungsprozessen für neue Produkte, die stark von Erfahrungen von Fachleuten abhängt. Dies ist nicht nur eine schwierige und zeitaufwändige Aufgabe, sondern auch eine fehleranfällige Aufgabe.

Es ist Aufgabe der Erfindung die genannten Nachteile im Stand der Technik zu überwinden und ein Verfahren und ein System bereitstellen, welche die Herstellung neuer Produkte erleichtern und verbessern, insbesondere durch Ermittlung einer optimalen Prozesskette für eine Produktionsanlage.

Die Aufgabe wird durch ein Verfahren eingangs genannter Art gelöst, wobei folgende Schritte ausgeführt werden:
a) Ermitteln zumindest eines Ziel-Merkmals für das neue Produkt,
b) Erfassen von bereits durchgeführten Prozessketten bei der Herstellung von Produkten durch die Anlage,
c) Erzeugen eines zusammengesetzten Prozessketten-Graphs aus dem zumindest einen Ziel-Merkmal und den bereits durchgeführten Prozessketten,
d) Erstes Bestimmen von Prozessketten-Lösungs-Kandidaten aus den zusammengesetzten Prozessketten-Graphen,
e) Zweites Bestimmen der möglichen Einsatzmittel aus den Prozessketten-Lösungs-Kandidaten und den durchgeführten Prozessketten,
f) Drittes Bestimmen der bevorzugten Prozessketten-Lösungen aus den Prozessketten-Lösungs-Kandidaten,
g) Erstes Auswählen der optimalen Prozesskette aus den bevorzugten Prozessketten-Lösungen,
h) Zweite Auswählen der Einsatzmittel aus der optimalen Prozesskette und den möglichen Einsatzmitteln,
i) Herstellen des neuen Produkts durch die Anlage.

Die genannten Prozessketten sind durch die umfassten Aufträge und deren Reihenfolge festgelegt, wobei einzelnen Aufträgen zugeordnete Einsatzmittel in jeweils unterschiedlicher Konfiguration vorgesehen sein können.

Durch das erfindungsgemäße Verfahren wird erreicht, dass die Anlage automatisch die optimale Prozesskette bestimmt, die zur Herstellung des neuen Produkts verwendet wird, indem das Wissen aus der Herstellung bereits erzeugter Produkte in die Zusammenstellung von Prozessketten für neue Produkte einfließt. Die Anlage kann daher als ein intelligentes Fertigungs-Ecosystem bezeichnet werden.

In solchen Ecosystemen werden häufig folgende Begriffe verwendet:
- **Produkt *p*:** weist Teile/Materialien auf, welche durch Merkmale beschrieben werden können. Ein Produkt kann in einer Stückliste *BoM* (englisch "Bill of Materials") spezifiziert werden und kann Ergebnis einer manuellen Produkt-Entwicklung sein. Ein Produkt *p* ist ein fertig erzeugtes Produkt.
- **Auftrag *t*** (englisch "task"): kann eine Ausführung eines Bearbeitungsschrittes sein, wie ein Loch in ein Werkstück bohren oder ein Modul in eine Basisplatte einsetzen. Ein Auftrag *t* ist ein einzelner Schritt im Herstellungsverfahren des Produkts *p.*
- **Einsatzmittel *r*** (englisch "resource"): kann ein Produktionswerkzeug oder Transportmittel sein, wie ein Roboter, eine CNC-Maschine ("computer numerical control"), ein 3D-Drucker oder ein Förderband. Menschen können auch als Einsatzmittel modelliert werden. Ein Einsatzmittel *r* kann eine Prozess-Vorrichtung sein, welche zur Ausführung eines Auftrags *t* zugeordnet ist, wie beispielsweise eine Maschine.
- **Herstellungsprozess *MP*** (englisch "manufacturing process"), **Prozesskette, Produktionsabfolge:** kann durch einen gerichteten Pfad-Graph *q* = (*T,E*) mit Aufträgen *t*₁, *t*₂,..., *tₙ* ∈ *T* beschrieben werden, wobei die Knoten jeweils Aufgaben repräsentieren und die Kanten Steuerflüsse zur Herstellung eines Produkts beschreiben, beginnend von Ausgangsteilen/ -materialien.
   Ein gerichteter Pfad-Graph ist ein Graph, in welchen die Knoten in einer Reihenfolge *t*₁, *t*₂,...,*tₙ* angegeben werden können, sodass sich die Kanten zu (*tᵢ*, *t*_{*i*+1}) ergeben, mit *i* = 1, 2, ..., *n* - 1.
   Jede Kante (*tᵢ*, *tⱼ*) ∈ *E* repräsentiert eine direkte Rangordnungsbeziehung zwischen zwei Aufträgen, wobei ein Auftrag *tⱼ* nach einem Auftrag *tᵢ* beginnt. Ein Herstellungsprozess *MP* ist eine Abfolge von Aufträgen zur Herstellung des Produkts *p*. Eine Funktion *γ*:(*Q* × *T*) → 2*^{R}* ordnet jedem Auftrag in einem Prozess ein mögliches Einsatzmittel *r ∈ R* zu, welches den Auftrag ausführen kann.
- **Merkmal *f*** (englisch "feature") bzw. Produkt-Merkmal: ist eine Eigenschaft eines fertigen Produkts aus Kundensicht, wie ein "gehärtetes", ein "coloriertes" oder ein "perforiertes" Metallprodukt. Jedes Produkt *p* weist eine Menge von Merkmalen *F* auf. Die Merkmalsmenge *F* definiert einen Problemraum für ein neues Produkt *p*, während die mit einer entsprechenden Menge von Einsatzmitteln *R* verknüpfte Herstellungsprozess *MP* einen Lösungsraum definiert. Ein Auftrag *t* trägt zur Realisierung eines oder mehrerer Merkmale bei.
   ▪ *φₜ*: *T* → 2*^{F}* ordnet einen Auftrag *t* der Merkmalsmenge *F* zu, welche zum Auftrag *t* beiträgt.
   ▪ ${ϕ}_{t} \left(t\right) ⊆ F .$
   ▪ *φ_{q}*: *Q* → 2*^{F}* ordnet einen Prozess *q* = (*T*,*E*) einer Merkmalsmenge zu, welcher zu allen Aufträgen *T* = {*t*₁, *t*₂,..., *tₙ*} beiträgt.
   ▪ ${ϕ}_{q} \left(q\right) = {∪}_{i = 1 … n} {ϕ}_{t} \left({t}_{i}\right) .$
- **Auftrags-Filterung** (englisch "task filtering by features") : eine Funktion *lₜ*:2*^{T}* → 2*^{T}* wählt aus allen Aufträgen von einer Prozessmenge *T* jene aus, welche zumindest zu einem Merkmal von Ziel-Merkmalen *F_{G}* beitragen: ${l}_{t} \left(T\right) = \left\{t∈T|{ϕ}_{t}\left(t\right)∩{F}_{G}\neq 0\right\}$
- **Kanten-Filterung** (englisch "edge filtering by features"):
   eine Funktion *lₑ*:2*^{E}* → 2*^{E}* wählt aus allen Aufträgen alle Kanten eines Prozesses (*T*, *E*) jene aus, welche zumindest zu einem Merkmal von Ziel-Merkmalen *F_{G}* beitragen: ${l}_{e} \left(E\right) = \left\{e∈E|{ϕ}_{t}\left({t}_{i}\right)∪{ϕ}_{t}\left({t}_{j}\right)∩{F}_{G}\neq 0\right\} mit e = \left({t}_{i}, {t}_{j}\right)$
- **Gesamt-1-gewichteter Graph** (englisch "total 1-weighted graph") : ein Gesamt-1-gewichteter Graph *g_{O}* = (*T_{O}*, *E_{O}*, *w_{O}*) wird von einer Prozessmenge *Q* = {*q*₁, *q*₂,..., *qₙ*} folgendermaßen abgeleitet, wobei *qᵢ* = (*Tᵢ*, *Eᵢ*): ${T}_{O} = {T}_{1} ∪ {T}_{2} ∪ … ∪ {T}_{n}$ ${E}_{O} = {E}_{1} ∪ {E}_{2} ∪ … ∪ {E}_{n}$ *w*₀: *E_{O}* → 1, d.h. alle Kanten haben ein Gewicht von 1.
   Folglich ist ein Gesamt-1-gewichteter Graph eine Vereinigung von vergangenen Prozessen mit einem Kantengewicht von 1.
- **Gesamt-Merkmals-gewichteter Graph** (englisch "total feature weighted graph"): ein Gesamt-Merkmals-gewichteter Graph wird von einer Prozessmenge *Q* = {*q*₁, *q*₂,...,*qₙ*} folgendermaßen abgeleitet, wobei *qᵢ* = (*Tᵢ*, *Eᵢ*): ${T}_{R} = Auftr {a}^{¨} {ge von Kanten l}_{e} \left({E}_{1}\right) ∪ {l}_{e} \left({E}_{2}\right) ∪ … ∪ {l}_{e} \left({E}_{n}\right)$ ${E}_{F} = {l}_{e} \left({E}_{1}\right) ∪ {l}_{e} \left({E}_{2}\right) ∪ … ∪ {l}_{e} \left({E}_{n}\right) ∪ {E}_{+} ,$ wobei *E*₊ = {(*tᵢ*, *tⱼ*)|*tᵢ*, *tⱼ* ∈ *lₜ*(*T_{F}*) ∧ *kein Pfad zwischen tᵢ und tⱼ*}
   Eine Gewichtsfunktion ${w}_{F} : E \to {Z}_{\geq 0}$ ist definiert mit: ${w}_{F} \left(e\right) = { \begin{matrix}1 & wenn e ∈ {E}_{+} \\ {\sum }_{i = 1}^{n} { \begin{matrix}1 & wenn e ∈ {l}_{e} \left({E}_{i}\right) \\ 0 & sonst\end{matrix} & sonst\end{matrix}$
   Ein Pfad in einem Graph ist eine Abfolge von Kanten, welche eine Abfolge von Knoten verbinden, die sich alle voneinander unterscheiden.
   *T_{F}* ⊆ *T*_{O} und *E_{F}* ⊆ *E*_{O} sind für *g*_{O} = (*T*_{O}, *E*_{O}, *w*_{O}) der Gesamt-1-gewichteter Graph von *Q*.
- **Gesamt-gewichteter Graph** (englisch "total weighted graph"): ausgehend von den Gesamt-1-gewichteten Graph *g*_{O} = (*T*_{O}, *E*_{O}, *W*_{O}) und *g*_{F} = (*T*_{F}, *E*_{F}, *w*_{F}), sowie der zu einer Menge *Q* von existierenden Prozessen gehörige Gesamt-Merkmals-Graph, ist ein Gesamt-gewichteter Graph *g*_{A} = (*T*_{A}, *E*_{A}, *w*_{A}) definiert mit: ${T}_{F} = {T}_{O}$ ${E}_{F} = {E}_{O} ∪ {E}_{+}$ ${w}_{F} \left(e\right) = { \begin{matrix}{w}_{0} \left(e\right) + {w}_{F} \left(e\right) & wenn e ∈ {E}_{F} \\ {w}_{0} \left(e\right) & sonst\end{matrix}$
- **Prozess-Generator** (englisch "process generator"): ausgehend von einem Gesamt-gewichteten Graph *g*_{A} = (*T_{A}*, *E_{A}*, *w_{A}*), sowie *T_{S}* ∈ *T_{A}* als Menge von Quell-Aufgaben, also Aufgaben ohne eingehende Kanten, und *T_{K}* ∈ *T_{A}* als Menge von End-Aufgaben, also Aufgaben ohne ausgehende Kanten, ist das Ziel des Prozess-Generators eine Menge von Prozess-Graphen *H* = {*h*₁, *h*₂, ..., *hₙ*} zu berechnen, wobei für jedes *h* = (T, E) ∈ *H, T* = {*t_{i,} t*_{*i*+1},..., *tⱼ*}, *E* = {(*tᵢ*, *t*_{*i*+1}), (*t*_{*i*+1}, *t*_{*i*+2}), ..., (*t*_{*j*-1}, *tⱼ*)} und folgende Eigenschaften gelten:
   ▪ *h* ist azyklisch,
   ▪ *h* beginnt bei einer Quell-Aufgabe (*tᵢ* ∈ *T_{S}*) und endet bei einer Ziel-Aufgaben (*tⱼ* ∈ *T_{K}*), und
   ▪ ${ϕ}_{q} \left({h}_{1}\right) ⊇ {F}_{G}$
   Die Minimierung einer Ziel-Funktion *c*(*E*) ist zum Ordnen des erzeugten Prozessgraphs vorteilhaft: $c \left(E\right) = {\sum }_{e ∈ E} \frac{1}{{w}_{A} \left(e\right)}$
- **Einsatzmittel-Zuordnungs-Problem** (englisch "resource assignment problem"): Ein Einsatzmittel-Zuordnungs-Problem ist definiert durch:
   ▪ Eine Prozessmenge *Q* = {*q*₁, *q*₂,..., *qₙ*},
   ▪ Eine Funktion *γ:*(*Q*×*T*) → 2*^{R}*, welche einen Auftrag *t* in einen Prozess *q* zu dessen Menge von Einsatzmitteln *R*_{(*q*,*t*)} abbildet,
   ▪ Eine Menge von erzeugten Prozessen *H* = {*h*₁, *h*₂,..., *hₘ*}.
   Eine Lösung für das Einsatzmittel-Zuordnungs-Problem (*Q,γ,T*) umfasst eine Funktion *γ_{H}*:*T* → 2^{(*R*×[0...1])}, welche einen Auftrag *t* ∈ *T* zu dessen Menge von Einsatzmittel-Wahrscheinlichkeiten Paaren {(*rᵢ, p*(*rᵢ, t*)), ..., (*rⱼ*, *p*(*rⱼ*, t))} zuordnet. Beispielsweise zeigt *p*(*rᵢ*, *t*), wie wahrscheinlich es ist, dass Einsatzmittel *rᵢ* zur Ausführung des Auftrags *t* verwendet werden können.
   Um *γ_{H}* zu erhalten werden zwei Hilfsdefinitionen benötigt. Eine Menge von allen möglichen Einsatzmitteln, welche den Auftrag *t* ausführen können, ist definiert durch: ${R}_{t}^{*} = {∪}_{q = \left(T, E\right) ∈ Q} {∪}_{t ∈ T} γ \left(q, t\right)$
   Ferner ist eine Funktion *p*(*r*,*t*) zur Bestimmung der Wahrscheinlichkeit von Einsatzmitteln *r*, welche den Auftrag *t* ausführen, definiert durch: $p \left(r, t\right) = \frac{{\sum }_{q ∈ Q} { \begin{matrix}{/}_{\left|γ\left(q, t\right)\right|} 1 & wenn q ∈ γ \left(q, t\right) \\ 0 & sonst\end{matrix}}{{\sum }_{q ∈ Q} { \begin{matrix}1 & wenn t ∈ T , wobei q = \left(T, E\right) \\ 0 & sonst\end{matrix}}$
   Die Funktion *γ_{H}*(*t*) ist definiert durch: ${γ}_{H} \left(t\right) = {∪}_{r ∈ {R}_{t}^{*}} \left(r,p\left(r, t\right)\right)$

In einer Weiterbildung der Erfindung ist es vorgesehen, dass der zusammengesetzte Prozessketten-Graph ein Gesamt-gewichteter Graph ist.

Dadurch wird erreicht, dass eine Berechnung von Wahrscheinlichkeiten für Prozessketten auf einfache Weise erfolgen kann.

In einer Weiterbildung der Erfindung ist es vorgesehen, dass der zusammengesetzte Prozessketten-Graph aus einem Gesamt-1-gewichteten Graph und/oder einem Gesamt-Merkmals-gewichteten Graph abgeleitet wird.

Dadurch wird erreicht, dass eine Berechnung von Wahrscheinlichkeiten für Prozessketten, sowie die Bestimmung der optimalen Prozesskette auf eine einfache Weise erfolgen kann.

In einer Weiterbildung der Erfindung ist es vorgesehen, dass der Gesamt-1-gewichtete Graph aus den bereits durchgeführten Prozessketten ermittelt wird.

Dadurch wird erreicht, dass die Anlage automatisch die optimale Prozesskette auf eine einfache Weise bestimmen kann, die zur Herstellung des neuen Produkts verwendet wird, indem das Wissen aus der Herstellung bereits erzeugter Produkte in die Erzeugung des Gesamt-1-gewichteten Graphs als Zusammenstellung von Prozessketten für neue Produkte einfließt. Dadurch kann eine Berechnung von Wahrscheinlichkeiten für Prozessketten auf einfache Weise erfolgen.

In einer Weiterbildung der Erfindung ist es vorgesehen, dass der Gesamt-Merkmals-gewichtete Graph aus dem Gesamt-1-gewichteten Graph ermittelt wird, welcher Kanten bevorzugt, die zumindest ein überlappendes Merkmal mit dem zumindest einen Ziel-Merkmal aufweisen.

Dadurch wird erreicht, dass eine Berechnung von Wahrscheinlichkeiten für Prozessketten auf einfache Weise erfolgen kann.

In einer Weiterbildung der Erfindung ist es vorgesehen, dass die möglichen Einsatzmittel und/oder die bereits durchgeführten Prozessketten mittels maschinellen Lernens erfasst werden.

Dadurch wird erreicht, dass eine Berechnung von Wahrscheinlichkeiten für Prozessketten auf einfache Weise mittels einer statistischen Aggregation erfolgen kann.

Die Anzahl der bereits durchgeführten Prozessketten, aus denen gelernt wird, kann dabei mehr als 10, bevorzugt mehr als 100, besonders bevorzugt mehr als 1000 sein.

Die erfindungsgemäße Aufgabe wird auch durch ein System eingangs genannter Art gelöst, umfassend
a) eine erste Vorrichtung zum Ermitteln zumindest eines Ziel-Merkmals für das neue Produkt,
b) eine zweite Vorrichtung zum Erfassen von bereits durchgeführten Prozessketten bei der Herstellung von Produkten durch die Anlage,
c) eine dritte Vorrichtung zum Erzeugen eines zusammengesetzten Prozessketten-Graph,
d) eine vierte Vorrichtung zum Bestimmen von Prozessketten-Lösungs-Kandidaten,
e) eine fünfte Vorrichtung zum Bestimmen der möglichen Einsatzmittel,
f) eine sechste Vorrichtung zum Bestimmen der bevorzugten Prozessketten-Lösungen,
g) eine siebente Vorrichtung zum Auswählen der optimalen Prozesskette,
h) eine achte Vorrichtung zum Auswählen der Einsatzmittel,
i) eine Anlage mit Einsatzmitteln zur Herstellung eines neuen Produkts,
wobei das System dazu eingerichtet ist, das Verfahren nach einem der vorhergehenden Ansprüche auszuführen.

Die Erfindung wird nachfolgend anhand eines in den beigeschlossenen Zeichnungen dargestellten Ausführungsbeispiels näher erläutert. In den Zeichnungen zeigt:
- Fig. 1: ein Blockdiagramm mit einem Ausführungsbeispiel für ein Verfahren zur Herstellung eines neuen Produkts mit Hilfe einer optimalen Prozesskette,
- Fig. 2: ein Blockdiagramm mit einem Ausführungsbeispiel für ein Verfahren zur Erzeugung eines Gesamtgewichteten Graphs,
- Fig. 3: ein erstes Beispiel für eine Prozesskette für ein erstes Produkt und einen Kochtopf als Beispiel für das erste Produkt,
- Fig. 4: ein zweites Beispiel für eine Prozesskette für ein zweites Produkt und ein Getriebe als Beispiel für das zweite Produkt,
- Fig. 5: ein drittes Beispiel für eine Prozesskette für ein drittes Produkt und eine Akten-Ablage als Beispiel für das dritte Produkt,
- Fig. 6: ein Gesamt-1-gewichteter Graph für das erste, das zweite und das dritte Produkt,
- Fig. 7: ein Gesamt-Merkmals-gewichteter Graph für das erste, das zweite und das dritte Produkt,
- Fig. 8: ein Gesamt-gewichteter Graph für das erste, das zweite und das dritte Produkt,
- Fig. 9: ein Gesamt-gewichteter Graph für ein neues Produkt und ein Abtropfgefäß als Beispiel für ein neues Produkt,
- Fig. 10: eine erste Prozesskette zur Herstellung des neuen Produkts,
- Fig. 11: eine zweite Prozesskette zur Herstellung des neuen Produkts,
- Fig. 12: eine dritte Prozesskette zur Herstellung des neuen Produkts,
- Fig. 13: ein Blockdiagramm mit einem Ausführungsbeispiel für ein erfindungsgemäßes System.

Im Folgenden wird ein Ausführungsbeispiel der Erfindung erläutert. Es ist klar, dass die Erfindung auf viele andere Produktions- und Produktbereiche angewandt werden kann. Das erfindungsgemäße Verfahren kann aus einer großen Anzahl an bereits erzeugten Produkten vorteilhaft für die Erzeugung zukünftiger Produkte lernen.

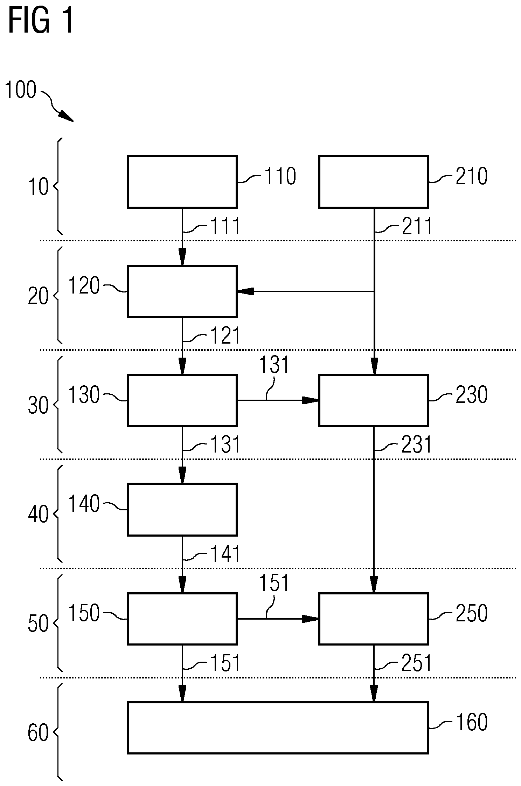

**Fig. 1** zeigt ein Blockdiagramm mit einem bevorzugten Ausführungsbeispiel für ein erfindungsgemäßes Verfahren 100.

Ein bereits bestehendes Wissen über die Herstellungsprozesse für bekannte Produkte 1, 2, 3 soll bei der Herstellung eines neuen Produkts 4 mit Hilfe einer automatisch erzeugten und optimalen Prozesskette angewendet werden.

Es sind in der Figur Parameter für die Eingabe 10, Verfahrensschritte Lernen 20, Erzeugen 30, Auswerten 40, Ausgeben 50 und Herstellen 60 des neuen Produkts 4 gekennzeichnet.

Das neue Produkt 4 wird durch eine Anlage 610 mit Einsatzmitteln hergestellt.

Folgende Schritte werden dabei ausgeführt:
a) Ermitteln 110 zumindest eines Ziel-Merkmals 111 (*F_{G}*) für das neue Produkt 4,
b) Erfassen 210 von bereits durchgeführten Prozessketten 400, 410, 420 bei der Herstellung von Produkten 1, 2, 3 durch die Anlage 610,
c) Erzeugen 120 eines zusammengesetzten Prozessketten-Graphs 121 aus dem zumindest einen Ziel-Merkmal 111 (*F_{G}*) und den bereits durchgeführten Prozessketten 400, 410, 420,
d) Erstes Bestimmen 130 von Prozessketten-Lösungs-Kandidaten 131 aus den zusammengesetzten Prozessketten-Graphen 121,
e) Zweites Bestimmen 230 der möglichen Einsatzmittel 231 (*r*₁ - *r*₁₅) aus den Prozessketten-Lösungs-Kandidaten 131 und den durchgeführten Prozessketten 400, 410, 420,
f) Drittes Bestimmen 140 der bevorzugten Prozessketten-Lösungen 141 aus den Prozessketten-Lösungs-Kandidaten 131,
g) Erste Auswahl 150 der optimalen Prozesskette 151 aus den bevorzugten Prozessketten-Lösungen 141,
h) Zweite Auswahl 250 der Einsatzmittel 251 aus der optimalen Prozesskette 151 und den möglichen Einsatzmitteln 231,
i) Herstellen 160 des neuen Produkts 4 durch die Anlage.

Es ist klar, dass sich die in der nachfolgenden Beschreibung genannten einzelnen Prozessketten in der jeweiligen Konfiguration der einzelnen, verketteten Prozesse, das heißt der Aufträge beziehungsweise der einzelnen Knoten im jeweiligen Graph unterscheiden können.

Einsatzmittel können beispielsweise Maschinen, Maschinenprogramme zur automatischen Durchführung mehrerer aufeinanderfolgender Arbeitsschritte, Maschinenkonfigurationen, Abfolgen von Teilschritten beim Zusammenbau von Einzelkomponenten zu einem Gesamtteil, Verbrauchs- und Ausgangs-Materialien, Transportmaßnahmen oder auch manuelle Tätigkeiten von Personen sein.

Eine Menge von erfassten Prozessketten 211 umfasst in diesem Beispiel die bereits erfassten Prozessketten 400, 410, 430 (*Q*) von den bereits hergestellten Produkten 1, 2 und 3, auf die nachfolgend weiter eingegangen wird.

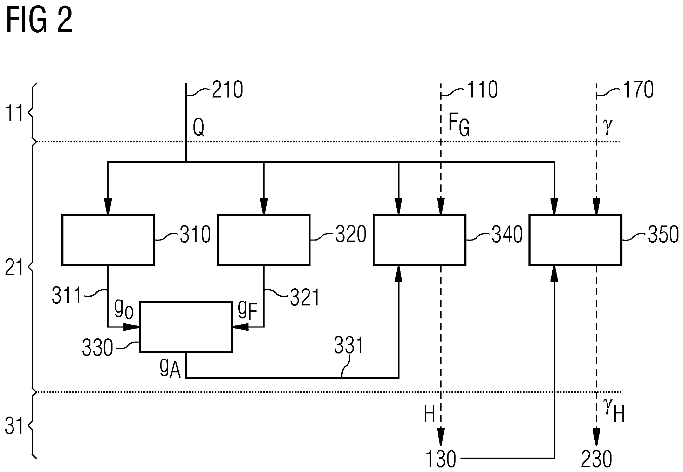

**Fig. 2** zeigt ein Blockdiagramm mit einem bevorzugten Ausführungsbeispiel für ein Verfahren 100 zur Erzeugung eines Gesamt-gewichteten Graphs.

Es sind Parameter für die Eingabe 11, das Verfahren 21 zur Erzeugung eines Gesamt-gewichteten Graphs und Parameter für die Ausgabe 31 erkennbar.

Für ein gewünschtes neues Produkt *p* kann mit einer Stückliste *BoM*, eine Menge von Merkmalen *F*, eine Menge von Aufträgen *T* und eine Menge von Einsatzmitteln *R* eine Prozess-Erzeugungsaufgabe (englisch "process generation problem") in folgende Teilaufgaben unterteilt werden:
- Auftragsauswahl-Aufgabe: finde eine Teilmenge *T'* aus der Auftragsmenge *T (T'* ⊆ *T*), welche für die Herstellung des neuen Produkts *p* benötigt wird.
- Prozessablauf-Aufgabe: finde alle Reihenfolgen-Beziehungen für *T'.*
- Einsatzmittel-Zuordnungs-Aufgabe: finde für jeden Auftrag *T'* ein Einsatzmittel, welches in der Lage ist, *T'* auszuführen.

Ein Prozess-Generator 340 nimmt eine Menge von Herstell-Prozessen *Q* = {*q*₁, *q*₂, ..., *qₙ*} bereits hergestellter Produkte, sowie eine Menge von Ziel-Merkmalen 111 (*F_{G}*) eines neuen Produkts *p* und einen Gesamt-gewichteten Graph 331 (*g_{A}*), welcher den Auftrag und die Gewichte aufweist, die von bereits existierenden Prozessen und Merkmalen durch Anwendung maschinellen Lernens erlernt wurden, und erzeugt eine Prozessmenge *H* = {*h*₁, *h*₂,..., *hₘ*}.

Der Gesamt-gewichtete Graph 331 (*g_{A}*) wird aus einem Gesamt-1 gewichteten Graph 311 (*g_{O}*) und einem Gesamt-Merkmals-gewichteter Graph 321 (*g_{F}*) in einem entsprechenden Verfahrensschritt 330 abgeleitet.

Der Gesamt-1-gewichtete Graph 311 (*g_{O}*) wird in einem entsprechenden Verfahrensschritt 310 bestimmt.

Der Gesamt-Merkmals-gewichteter Graph 321 (*g_{F}*) wird in einem entsprechenden Verfahrensschritt 320 bestimmt.

Eine Lösung der Erzeugungsaufgabe soll dabei folgende Kriterien erfüllen:
- Technisch machbar: beispielsweise müssen die Materialien von einem vorgelagerten zu einem nachgelagerten Prozess transportierbar sein, oder eine Maschine muss in der Lage sein ein entsprechendes Material zu bearbeiten.
- Effektiv: es sollen alle Merkmale des neuen Produkts durch die ausgewählten Aufträge realisiert werden.
- Effizient: es sollen keine oder möglichst wenige Aufträge bearbeitet werden, die zu den Merkmalen nichts beitragen.
- Optimal: es sollen zusätzliche Kriterien, wie minimale CO₂-Emissionen oder minimale Produktions-Durchlaufzeit berücksichtigt werden.

Eine Lösung für ein Prozess-Erzeugungs-Problem ist eine Menge von alternativen Prozessen beziehungsweise Prozessoptionen *H* = {*h*₁, *h*₂,...,*hₘ*}, wovon jeder ein Prozess-Kandidat zur Herstellung des neuen Produkts *p* mit den Merkmalen 111 (*F_{G}*) ist.

Jedoch erfordert eine Einsatzmittel-Zuordnungs-Komponente Herstell-Prozessen *Q, H* und eine Funktion 170 (*γ*), welche die Aufträge der Prozessmenge *Q* zu den zuvor zugeordneten Einsatzmitteln zuweist.

Die Lösung des Einsatzmittel-Zuordnungs-Problems ist eine Funktion 231 (*γ_{H}*), welche bevorzugte Einsatzmittel von der Funktion 170 (*γ*) bevorzugt mittels maschinellen Lernens erlernt und eine Menge von Einsatzmittel-Wahrscheinlichkeits-Paaren für jeden Auftrag in der Prozessmenge *H* in einem Schritt 350 zuordnet.

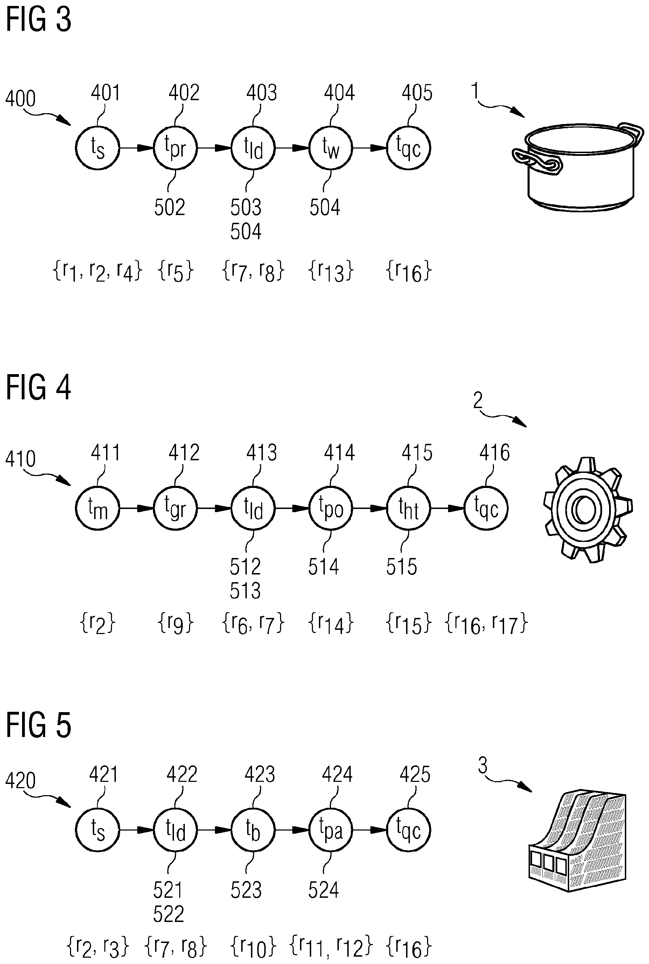

**Fig. 3** zeigt ein erstes Beispiel für eine Prozesskette 400 für das erste Produkt 1 in Form eines Kochtopfes.

Die Prozesskette 400 für den Kochtopf 1 umfasst Abscheren 401, Pressen 402, Laser-Bohren 403, Schweißen 404 und eine Qualitätskontrolle 405 in der genannten Reihenfolge.

Der Kochtopf 1 weist als Merkmal eine konkave Form 502 auf, welche durch den Prozess 402 erreicht wird, sowie Griffe 503, welche an, durch das Laser-Bohren 403 eingebrachten Perforierungen am Topf durch den Prozess 404 angeschweißt werden.

Im Schritt Abscheren 401 werden Einsatzmittel *r*₁, *r*₂, *r*₄ beispielsweise in Form entsprechender Anlagen und Materialien zur Durchführung des Bearbeitungsschritts angewendet, wie beispielsweise ein manuelles Bearbeiten des Werkstücks durch eine Person. Im Schritt Pressen 402 wird ein Einsatzmittel *r*₅ angewendet, wie beispielsweise ein manuelles Bearbeiten des Werkstücks mit einer teilautomatischen Presse durch eine Person. Im Schritt Laser-Bohren 403 werden Einsatzmittel *r*₇, *r*₈ angewendet, wie beispielsweise die Bearbeitung durch eine CNC-Maschine. Im Schritt Schweißen 404 wird ein Einsatzmittel *r*₁₃ angewendet, wie beispielsweise die Bearbeitung durch einen Schweiß-Roboter. Im Schritt Qualitätskontrolle 405 wird ein Einsatzmittel *r*₁₆ angewendet, wie beispielsweise eine visuelle Inspektion des Werkstücks durch eine Person.

Der bekannte Prozess 400 zur Erzeugung des Edelstahl-Kochtopfes 1 (englisch "steel pot") *qₛₚ* = (*Tₛₚ*, *Eₛₚ*) umfasst ein Herstellungswissen eines Betreibers der Anlage beispielweise in Form von Details zur Herstellung und Hantierung, sowie über Verbrauchs- und Ausgangs-Materialien aus einer bereits erfolgten Produktion des Kochtopfs 1.

Die Menge an Aufträgen (englisch "task") *Tₛₚ* umfasst die Aufträge Abscheren (englisch "shearing") 401 (*tₛ*), Pressen (englisch "presssing") 402 (*tₚᵣ*), Laser-Bohren (englisch "laser drilling") 403 (*t_{ld}*), Schweißen (englisch "welding") 404 (*t_{w}*) und eine Qualitätskontrolle (englisch "quality check") 405 (*t_{qc}*).

Die Menge an Kanten (englisch "edge") *Eₛₚ* umfasst die Kanten (*tₛ, tₚᵣ*), (*t*_{*pr*,} *t_{ld}*), *(t_{ld}*, *t_{w}*) und (*t_{w}*, *t_{qc}*).

Die Menge an Einsatzmitteln (englisch "resource"), welche die jeweiligen Aufträge ausführen kann, ist in der Figur unterhalb der Prozesskette 400 dargestellt, beispielsweise $γ \left({q}_{sp}, {t}_{s}\right) = \left\{{r}_{1}, {r}_{2}, {r}_{4}\right\} .$

Die Aufträge eines Prozesses sind durch die Merkmale, zu welchen sie beitragen, gekennzeichnet.

Diese Merkmale sind unter den Aufträgen erkennbar, wie ${ϕ}_{t} \left({t}_{ld}\right) = \left\{mit Griff 503, perforiert 504\right\} .$

Die Merkmalsmenge des Prozesses bzw. der Prozesskette 400 (*qₛₚ*) für den Stahl-Kochtopf 1 ist ${ϕ}_{q} \left({q}_{sp}\right) = \left\{konkav 502mit Griff 503, perforiert 504\right\} .$

**Fig. 4** zeigt ein zweites Beispiel für eine Prozesskette 410 für das zweite Produkt 2 in Form eines Motor-Getriebes. Symbolisch dafür ist nur ein Zahnrad dargestellt, wobei klar ist, dass ein Getriebe neben Zahnrädern beispielsweise auch weitere Teile, wie ein Gehäuse mit Griff, Befestigungsmittel oder Betriebsmittel wie Schmierstoffe umfasst.

Die Prozesskette 410 für das Getriebe 2 umfasst Gießen 411, Schleifen 412, Laser-Bohren 413, Polieren 414, HitzeBehandlung 415 und eine Qualitätskontrolle 416 in der genannten Reihenfolge.

Das Motor-Getriebe 2 weist als Merkmal einen Griff 512 am Gehäuse (nicht gezeigt) in Form einer entsprechenden Öffnung beziehungsweise Perforierungen 513 auf, welche mittels Laser-Bohren 413 eingebracht werden, sowie eine polierte 514 und gehärtete 515 Oberfläche.

Im Schritt Gießen 411 wird das Einsatzmittel *r*₂ beispielsweise in Form entsprechender Anlagen und Materialien zur Durchführung des Bearbeitungsschritts angewendet. Im Schritt Schleifen 412 wird ein Einsatzmittel *r*₉ angewendet, wie beispielsweise ein manuelles Bearbeiten des Werkstücks durch eine Person. Im Schritt Laser-Bohren 413 werden Einsatzmittel *r*₆, *r*₇ angewendet, wie beispielsweise die Bearbeitung durch eine CNC-Maschine. Im Schritt Polieren 414 wird ein Einsatzmittel *r*₁₄ angewendet, beispielsweise ein manuelles Bearbeiten des Werkstücks durch eine Person. Im Schritt Hitzebehandlung 415 wird ein Einsatzmittel *r*₁₅ angewendet, wie ein Eintauchen des heißen Werkstücks in ein kaltes Ölbad. Im Schritt Qualitätskontrolle 415 werden Einsatzmittel *r*₁₆, *r*₁₇ angewendet, wie beispielsweise eine visuelle Inspektion des Werkstücks durch eine Person.

Der bekannte Prozess 410 zur Erzeugung des Getriebes 2 (englisch "gear") *q_{g}* = (*T_{g}*, *E_{g}*) umfasst ein Herstellungswissen eines Betreibers der Anlage aus einer bereits erfolgten Produktion des Getriebes 2.

Die Menge an Aufträgen *T_{g}* umfasst die Aufträge Gießen (englisch "molding") 411 (*tₘ*), Schleifen (englisch "grinding") 412 (*t_{gr}*), Laser-Bohren 413 (*t_{ld}*), Polieren (englisch "polishing") 414 (*tₚₒ*), Hitzebehandlung (englisch "heat treatment") 415 (*tₕₜ*) und eine Qualitätskontrolle 416 (*t_{qc}*).

Die Menge an Kanten *E_{g}* umfasst die Kanten (*tₘ*, *t_{gr}*), (*t_{gr}*, *t_{ld}*), (*t_{ld}*, *tₚₒ*) und (*tₚₒ*, *t_{qc}*).

Die Merkmalsmenge des Prozesses bzw. der Prozesskette 410 (*q_{g}*) für das Getriebe 2 ist ${ϕ}_{q} \left({q}_{g}\right) = \left\{mit Griff 512, perforiert 513,poliert 514,geh{a}^{¨}rtet 515\right\} .$

**Fig. 5** zeigt ein drittes Beispiel für eine Prozesskette 420 für das dritte Produkt 3 in Form einer Akten-Ablage beziehungsweise eines Stehsammlers.

Die Prozesskette 420 für das Akten-Ablage 3 umfasst Abscheren 421, Laser-Bohren 422, Biegen 423, Lackieren/Färben 424 und eine Qualitätskontrolle 425 in der genannten Reihenfolge.

Die metallische Akten-Ablage 3 weist als Merkmal Griffe 521 und Perforierungen 522 auf, welche mittels Laser-Bohren 422 eingebracht werden, sowie eine eckige Form 523 und die Akten-Ablage 3 ist gefärbt 524.

Im Schritt Abscheren 421 werden Einsatzmittel *r*₂, *r*₃ beispielsweise in Form entsprechender Anlagen und Materialien zur Durchführung des Bearbeitungsschritts angewendet. Im Schritt Laser-Bohren 422 werden die Einsatzmittel *r*₆, *r*₈ angewendet, wie beispielsweise die Bearbeitung durch eine CNC-Maschine. Im Schritt Biegen 423 wird das Einsatzmittel *r*₁₀ angewendet, wie beispielsweise ein manuelles Bearbeiten des Werkstücks mit einer teilautomatischen Biegemaschine durch eine Person. Im Schritt Lackieren 424 werden Einsatzmittel *r*₁₁, *r*₁₂ angewendet, wie beispielsweise ein manuelles Bearbeiten des Werkstücks durch eine Person. Im Schritt Qualitätskontrolle 415 wird das Einsatzmittel *r*₁₆ angewendet, wie beispielsweise eine visuelle Inspektion des Werkstücks durch eine Person.

Der bekannte Prozess 420 zur Erzeugung der Akten-Ablage 3 (englisch "file organizer") *q_{fo}* = (*T_{fo}, E_{fo}*) umfasst ein Herstellungswissen eines Betreibers der Anlage aus einer bereits erfolgten Produktion der Akten-Ablage 3 aus Metall.

Die Menge an Aufträgen *T_{fo}* umfasst die Aufträge Abscheren 421 (*tₛ*), Laser-Bohren 422 (*t_{ld}*), Biegen (englisch "bending") 423 (*t_{b}*), Lackieren/Färben (englisch "painting") 424 (*tₚₐ*) und eine Qualitätskontrolle 425 (*t_{qc}*).

Die Menge an Kanten *E_{fo}* umfasst die Kanten (*tₛ, t_{ld}*), (*t_{ld}*, *t_{b}*), (*t_{b}*, *tₚₐ*) und (*tₚₐ*, *t_{qc}*).

Die Merkmalsmenge des Prozesses bzw. der Prozesskette 420 (*q_{fo}*) für die Akten-Ablage ist ${ϕ}_{q} \left({q}_{fo}\right) = \left\{mit Griff 521, perforiert 522,eckig 523,gef{a}^{¨}rbt 524\right\} .$

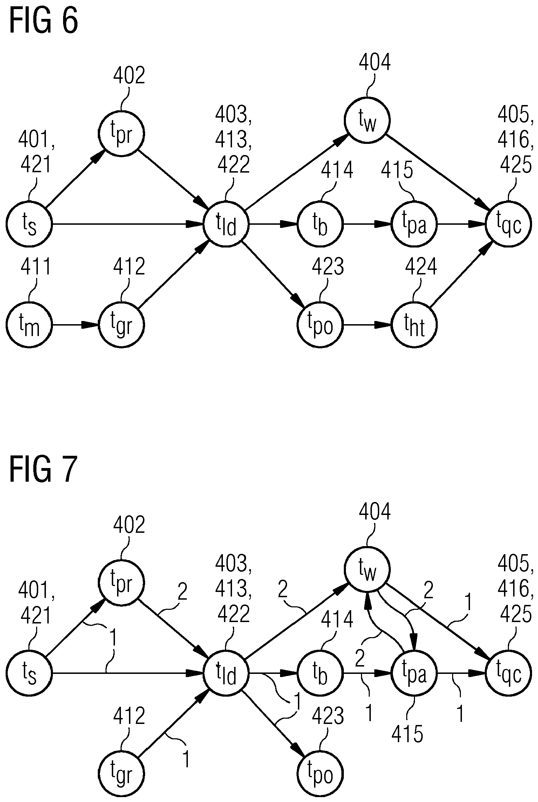

**Fig. 6** zeigt einen Gesamt-1-gewichteten Graph für den Kochtopf 1, das Getriebe 2 und die Akten-Ablage 3.

Ein Gesamt-1-gewichteter Graph ist eine Vereinigung der vergangenen Prozesse mit einem Kantengewicht von 1.

Der Gesamt-1-gewichteter Graph der Fig. 6 ist eine Vereinigung der vergangenen Prozesse *qₛₚ* der Fig. 3, *q_{g}* der Fig. 4 und *q_{fo}* der Fig. 5.

**Fig. 7** zeigt einen Gesamt-Merkmals-gewichteten Graph für den Kochtopf 1, das Getriebe 2 und die Akten-Ablage 3.

Der Gesamt-Merkmals-gewichtete Graph wird aus dem Gesamt-1-gewichteten Graph *g*_{F} ermittelt, welcher Kanten mit Aufträgen bevorzugt beziehungsweise erfasst, die überlappende Merkmale mit den Ziel-Merkmalen *F_{G}* aufweisen.

Dementsprechend sind die Aufträge *tₘ* und *tₕₜ* aus Fig. 6 nicht vom Gesamt-Merkmals-gewichteten Graph der Fig. 7 umfasst.

Beispielsweise weist die Kante (*tₚᵣ*, *t_{ld}*) ein Gewicht von *w_{F}*((*tₚᵣ*, *t_{ld}*))= 2 auf, da sowohl *tₚᵣ* als auch *t_{ld}* Merkmale den Ziel-Merkmalen *F*_{G} umfassen, nämlich jeweils *konkav* 502 und *mit Griff* 503/*perforiert* 504.

Ferner sind die Aufträge, die mit den Ziel-Merkmalen *F*_{G} überlappende Merkmale haben, jedoch keinen Pfad dazwischen aufweisen, bidirektional miteinander verbunden. Beispielsweise haben die Prozesse Schweißen 404, 434, 456 (*t_{w}*) und Lackieren 424 (*tₚ*) die Merkmale *mit Griff* 503 und *gefärbt* 524, die in den Ziel-Merkmalen *F*_{G} enthalten sind.

Die Kantengewichte betragen für *w_{F}*((*tₛ*, *tₚᵣ*)) = 1, *w_{F}*((*tₚᵣ*, *t_{ld}*)) = 2, *w_{F}*((*tₛ*, *t_{ld}*)) = 1, *w_{F}*((*t_{gr}, t_{ld}*)) = 1, *w_{f}*((*t_{ld}*, *t_{w}*)) = 2, *w_{F}*((*t_{w}*, *t_{qc}*)) = 1, *w_{F}*((*t_{ld}*, *t_{b}*)) = 1, *w_{F}*((*t_{b}, tₚₐ*)) = 1, *w_{F}*((*tₚₐ, t_{qc}*)) = 1, *w_{F}*((*t_{ld}*, *tₚₒ*)) = 1, *w_{F}*((*tₚₐ*, *t_{w}*)) = 2 und *w_{F}*((*t_{w}*, *tₚₐ*)) = 2.

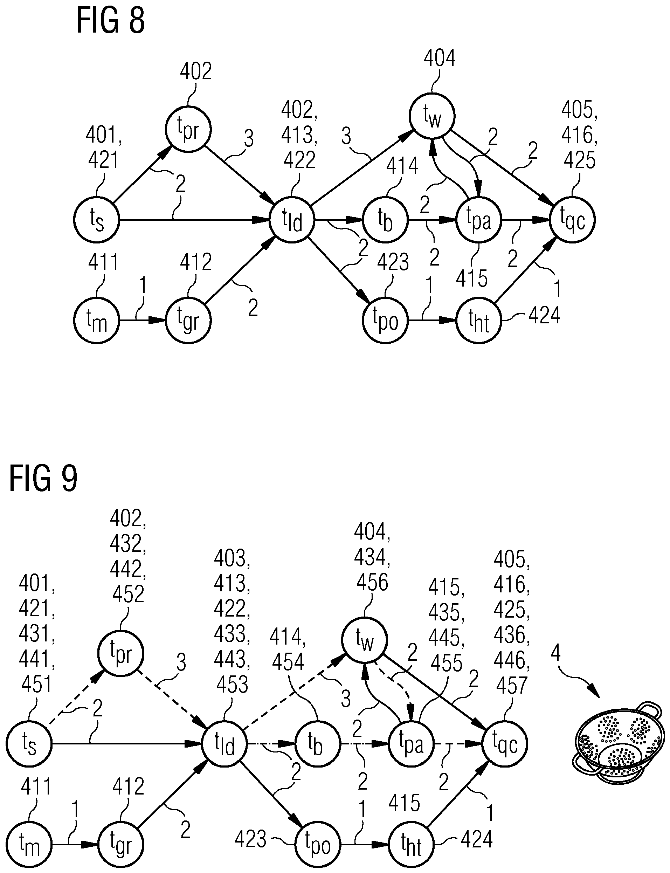

**Fig. 8** zeigt einen Gesamt-gewichteten Graph für den Kochtopf 1, das Getriebe 2 und die Akten-Ablage 3.

Die Kantengewichte betragen für *w_{A}*((*tₛ, tₚᵣ*)) = 2, *w_{A}*((*tₚᵣ, t_{ld}*)) = 3, *w_{A}*((*tₛ, t_{ld}*)) = 2, *w_{A}*((*tₘ, t_{gr}*)) = 1, *w_{A}*((*t_{gr}, t_{ld}*)) = 2, *w_{A}*((*t_{ld}, t_{w}*)) = 3, *w_{A}*((*t_{w}, t_{qc}*)) = 2, *w_{A}*((*t_{ld}, t_{b}*)) = 2, *w_{A}*((*t_{b}, tₚₐ*)) = 2, *w_{A}*((*tₚₐ, t_{qc}*)) = 2, *w_{A}*((*t_{ld}, tₚₒ*)) = 2, *w_{A}*((*tₚₒ, tₕₜ*)) = 1, *w_{A}*((*tₕₜ, t_{qc}*)) = 1, *w_{A}*((*tₚₐ, t_{w}*)) = 2 und *w_{A}*((*t_{w}, tₚₐ*)) = 2.

**Fig. 9** zeigt einen Gesamt-gewichteten Graph für das neue Produkt 4 und ein Abtropfgefäß als Beispiel für das neue Produkt 4, wobei die Prozessmenge *H* = {*h*₁, *h*₂, *h*₃} mit generierten Prozess-Alternativen zur Herstellung des Abtropfgefäßes 4 dargestellt ist, welche durch das erfindungsgemäße Verfahren zur Herstellung des Abtropfgefäßes 4 automatisch ermittelt wird, indem bestehendes Herstellungswissen genützt wird.

Die Merkmalsmenge des Zielprodukts 4 ist ${F}_{G} = \left\{konkav 551,mit Griff 552, perforiert 553,gef{a}^{¨}rbt 554\right\} .$

Zur Auswahl der optimalen Prozesskette wird das Minimum aus den Optimierungsfunktionen *c*(*E*₁), *c*(*E*₂) und *c*(*E*₃) ermittelt.

Der Prozess *h*₁ mit dem minimalen Optimierungs-Funktionswert von *h*₁ ist als strichlierte Pfeilabfolge dargestellt.

Der Prozess *h*₂ ist als strichlierte/strich-punktierte Pfeilabfolge dargestellt.

Der Prozess *h*₃ ist als strichlierte/strichpunktierte/durchgezogene Pfeilabfolge dargestellt.

Alle erzeugten Prozessalternativen 430, 440, 450 erfüllen die Eigenschaften für einen Prozess-Generator, nämlich:
▪ *h*₁, *h*₂ und *h*₃ sind azyklisch,
▪ *tₛ* ist eine Quell-Aufgabe und *t_{qc}* ist eine End-Aufgaben, und
▪ *φ_{q}*(*h*₁) ⊇ *F_{G}*, *φ_{q}*(*h₂*) ⊇ *F_{G}* und *φ_{q}*(*h₃*) ⊇ *F_{G}*, das heißt die Vereinigungsmenge von Merkmalen jedes erzeugten Prozesses ist eine Supermenge von *F_{G}* oder entspricht *F_{G}.*

Die Prozesse 430, 440, 450 sind hinsichtlich ihrer Ziel-Funktion sortiert, das heißt *c*(*E*₁) < *c*(*E*₂) < *c*(*E*₃)*.*

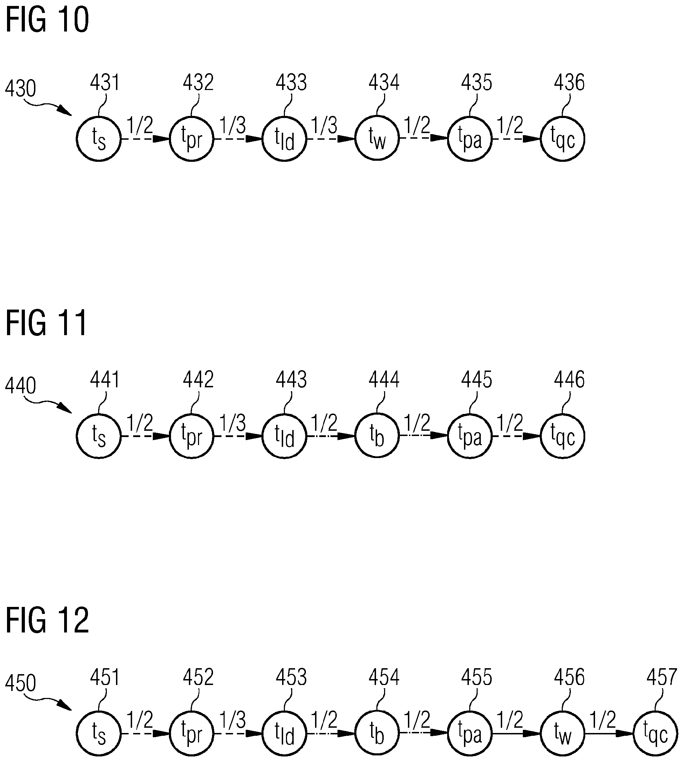

**Fig. 10** stellt eine erste Prozesskette 430 (*h*₁) zur Herstellung des Abtropfgefäßes 4 dar.

Das Abtropfgefäß 4 kann demgemäß mittels Abscheren 431 (*tₛ*), Pressen 432 (*tₚᵣ*), Laser-Bohren 433 *(t_{ld}*), Schweißen 434 (*t_{w}*), Lackieren/Färben 435 (*tₚₐ*) und eine Qualitätskontrolle 436 (*t_{qc}*) erzeugt werden.

Die Ziel-Funktion für die erste Prozessoption 430 des Abtropfgefäßes 4 kann entsprechend dem Kantengewicht *w_{A}* bestimmt werden. $c \left({E}_{1}\right) = \frac{1}{2} + \frac{1}{3} + \frac{1}{3} + \frac{1}{2} + \frac{1}{2} = 2.16$

Der erzeugten Prozessoption 430, das heißt einem Prozess-Kandidaten, werden Einsatzmittel zugeordnet, sodass der Prozess 430 ausführbar ist.

Dazu wird die Funktion *γ_{H}*(*t*) verwendet, welche die Wahrscheinlichkeit der Ausführung jedes Einsatzmittels berechnet, das den Auftrag t bei bereits durchgeführten Prozessen ausgeführt hat.

Beispielsweise wurde der Auftrag *tₛ* durch die Einsatzmittel {*r₁*, *r*₂, *r*₄} in *qₛₚ* oder durch die Einsatzmittel {*r*₂, *r*₃} in *q_{fo}* ausgeführt.

Die Einsatzmittel {*r*₁, *r*₂, *r*₃, *r*₄} sind daher mögliche Einsatzmittel um den Auftrag *tₛ* auszuführen. Jedoch ist auch bekannt, dass das Einsatzmittel *r*₂ bereits für beide vergangene Prozesse 401, 421 zugewiesen wurde und folglich das Einsatzmittel *r*₂ eine bevorzugte Variante zur Ausführung des Auftrags *tₛ* ist. Dieses Wissen aus vergangenen Prozessen wird verwendet, um die Wahrscheinlichkeiten von Zuordnungshäufigkeiten dieser Einsatzmittel zu Aufträgen abzuleiten.

Beispielsweise wird eine Einsatzmittel-Zuordnung für den Auftrag *tₛ* bestimmt zur Funktion ${γ}_{H} \left({t}_{s}\right) = \left\{\left({r}_{1},p\left({r}_{1}, {t}_{s}\right)\right), \left({r}_{2},p\left({r}_{2}, {t}_{s}\right)\right), \left({r}_{3},p\left({r}_{3}, {t}_{s}\right)\right), \left({r}_{4},p\left({r}_{4}, {t}_{s}\right)\right)\right\}$ wobei $p \left({r}_{1}, {t}_{s}\right) = \frac{\frac{1}{3} + 0 + 0}{1 + 0 + 1} = 0.166$ $p \left({r}_{2}, {t}_{s}\right) = \frac{\frac{1}{3} + 0 + \frac{1}{2}}{1 + 0 + 1} = 0.416$ $p \left({r}_{3}, {t}_{s}\right) = \frac{0 + 0 + \frac{1}{2}}{1 + 0 + 1} = 0.25$ $p \left({r}_{4}, {t}_{s}\right) = \frac{\frac{1}{3} + 0 + 0}{1 + 0 + 1} = 0.166$

Folglich ist die Funktion ${γ}_{H} \left({t}_{s}\right) = \left\{\left({r}_{1}, 0.166\right), \left({r}_{2}, 0.416\right), \left({r}_{3}, 0.25\right), \left({r}_{4}, 0.166\right)\right\}$

Dies bedeutet, dass das Einsatzmittel *r*₂ ein guter Kandidat zur Ausführung des Auftrags *tₛ* ist, gefolgt vom Einsatzmittel *r*₃ und gleichermaßen von den Einsatzmitteln *r*₁ und *r*₄.

Um Einsatzmittel den erzeugten Prozessen zuzuordnen, werden die Funktionen *γ_{H}*(*tₛ*), *γ_{H}*(*tₚᵣ*), *γ_{H}*(*t_{ld}*), *γ_{H}*(*t_{w}*), *γ_{H}*(*tₚₐ*), *γ_{H}*(*t_{b}*), und *γ_{H}*(*t_{qc}*), berechnet.

**Fig. 11** stellt eine zweite Prozesskette 440 (*h*₂) zur Herstellung des Abtropfgefäßes 4 dar.

Das Abtropfgefäß 4 kann demgemäß mittels Abscheren 441 (*tₛ*),

Pressen 442 (*tₚᵣ*), Laser-Bohren 443 (*t_{ld}*), Biegen 444 (*t_{b}*), Lackieren/Färben 445 (*tₚₐ*) und eine Qualitätskontrolle 446 (*t_{qc}*) erzeugt werden.

Die Ziel-Funktion für die zweite Prozessoption 440 des Abtropfgefäßes 4 kann entsprechend dem Kantengewicht *w_{A}* bestimmt werden. $c \left({E}_{2}\right) = \frac{1}{2} + \frac{1}{3} + \frac{1}{2} + \frac{1}{2} + \frac{1}{2} = 2.33$

**Fig. 12** stellt eine dritte Prozesskette 450 (*h*₃) zur Herstellung des Abtropfgefäßes 4 dar.

Das Abtropfgefäß 4 kann demgemäß mittels Abscheren 451 (*tₛ*), Pressen 452 (*tₚᵣ*), Laser-Bohren 453 (*t_{ld}*), Biegen 454 (*t_{b}*), Lackieren/Färben 455 (*tₚₐ*), Schweißen 456 (*t_{w}*) und eine Qualitätskontrolle 457 (*t_{qc}*) erzeugt werden.

Die Ziel-Funktion für die dritte Prozessoption 450 des Abtropfgefäßes 4 kann entsprechend dem Kantengewicht *w_{A}* bestimmt werden. $c \left({E}_{3}\right) = \frac{1}{2} + \frac{1}{3} + \frac{1}{2} + \frac{1}{2} + \frac{1}{2} + \frac{1}{2} = 2.83$

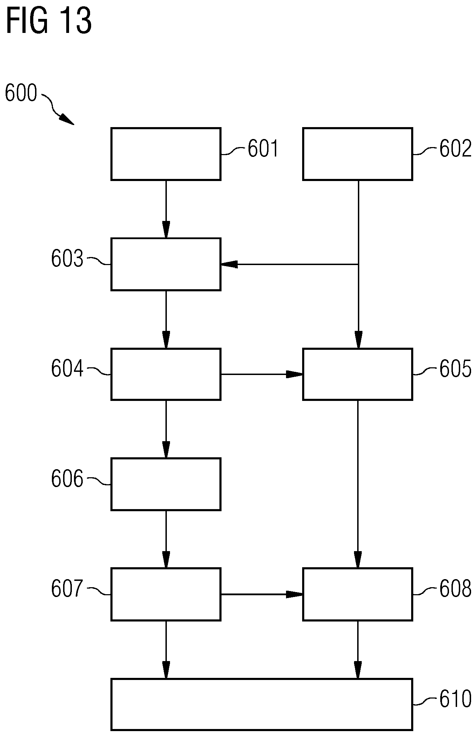

**Fig. 13** zeigt ein Blockdiagramm mit einem Ausführungsbeispiel für ein erfindungsgemäßes System 600.

Eine erste Vorrichtung 601 ist dazu eingerichtet, zumindest ein Ziel-Merkmal 111 für das neue Produkt 4 zu ermitteln.

Eine zweite Vorrichtung 602 ist dazu eingerichtet, von bereits durchgeführten Prozessketten 400, 410, 420 bei der Herstellung von Produkten 1, 2, 3 durch die Anlage 610 zu erfassen.

Eine dritte Vorrichtung 603 ist dazu eingerichtet, einen zusammengesetzten Prozessketten-Graph 121 zu erzeugen.

Eine vierte Vorrichtung 604 ist dazu eingerichtet, Prozessketten-Lösungs-Kandidaten 131 zu bestimmen.

Eine fünfte Vorrichtung 605 ist dazu eingerichtet, mögliche Einsatzmittel 231 zu bestimmen.

Eine sechste Vorrichtung 606 ist dazu eingerichtet, bevorzugten Prozessketten-Lösungen 141 zu bestimmen.

Eine siebente Vorrichtung 607 ist dazu eingerichtet, die optimale Prozesskette 151 auszuwählen.

Eine achte Vorrichtung 608 ist dazu eingerichtet, Einsatzmittel 251 auszuwählen.

Die Anlage 610 mit Einsatzmitteln ist zur Herstellung des neuen Produkts 4 vorgesehen.

Das System 600 ist dazu eingerichtet, das erfindungsgemäße Verfahren auszuführen.

### Bezugszeichenliste:

- 1: erstes Produkt, Stahl-Kochtopf
- 2: zweites Produkt, Getriebe
- 3: drittes Produkt, Akten-Ablage aus Metall
- 4: neues Produkt, Abtropfgefäß aus Metall
- 10, 11: Eingabe
- 20: Schürfen
- 30: Erzeugung
- 21, 100: Verfahren
- 40: Auswertung
- 31, 50: Ausgabe
- 60: Herstellung
- 110: Ermitteln von Ziel-Merkmalen *F_{G}* für ein Produkt
- 111: Ziel-Merkmale *F_{G}* des neuen Produkts
- 120: Erzeugen eines zusammengesetzten Prozessketten-Graphs *g_{A}*
- 121: Parameter für Lösungs-Erzeugung aus Graph *g_{A}*
- 130: Bestimmen von Lösungs-Kandidaten *H* für Prozesskette
- 131: Lösungs-Kandidaten *H*
- 140: Bestimmen bevorzugter Prozessketten *H** ⊆ *H*
- 141: bevorzugte Prozessketten *H** ⊆ *H*
- 150: Auswählen der optimalen Prozesskette *h** ∈ *H**
- 151: optimale Prozesskette *h** ∈ *H**
- 160: Herstellen des Produkts durch Anlage
- 170: Funktion *γ*
- 210: Erfassen von bereits durchgeführten Prozessketten *Q*
- 211: Menge von erfassten Prozessketten *Q*
- 230: Bestimmen der möglichen Einsatzmittel *γ_{H}*
- 231: mögliche Einsatzmittel *γ_{H}* je Auftrag
- 250: Auswählen der Einsatzmittel *γ** ∈ *γ_{H}*
- 251: ausgewählte Einsatzmittel *γ** ∈ *γ_{H}*
- 310: Bestimmen Gesamt-1-gewichteter Graph *g_{O}*
- 311: Gesamt-1-gewichteter Graph *g_{O}*
- 320: Bestimmen Gesamt-Merkmals-gewichteter Graph *g_{F}*
- 321: Gesamt-Merkmals-gewichteter Graph *g_{F}*
- 330: Bestimmen Gesamt-gewichteter Graph *g_{A}*
- 331: Gesamt-gewichteter Graph *g_{A}*
- 340: Prozess-Generator
- 350: Zuordnen von Einsatzmitteln
- 400: Prozess "Stahl-Kochtopf"
- 401, 421, 431, 441, 451: Abscheren
- 402, 432, 442, 452: Pressen
- 403, 413, 422, 433, 443, 453: Laser Bohren
- 404, 434, 456: Schweißen
- 405, 416, 425, 436, 446, 457: Qualitätskontrolle
- 410: Prozess "Getriebe"
- 411: Gießen
- 412: Schleifen
- 414: Polieren
- 415: Hitzebehandlung
- 420: Prozess "Akten-Ablage"
- 423, 454: Biegen
- 424, 435, 445, 455: Lackieren
- 430: Prozessoption 1 für das "Abtropfgefäß"
- 440: Prozessoption 2 für das "Abtropfgefäß"
- 450: Prozessoption 3 für das "Abtropfgefäß"
- 502: konkave Form
- 503, 512, 521: Werkstück mit Griff
- 504, 513, 522: perforierte Fläche
- 514: polierte Oberfläche
- 515: gehärtetes Material
- 523: eckige Form
- 524: gefärbtes Werkstück
- 600: System
- 601: Vorrichtung zum Ermitteln zumindest eines Ziel-Merkmals für das neue Produkt
- 602: Vorrichtung zum Erfassen von bereits durchgeführten Prozessketten bei der Herstellung von Produkten durch die Anlage
- 603: Vorrichtung zum Erzeugen eines zusammengesetzten Prozessketten-Graphs
- 604: Vorrichtung zum Bestimmen von ProzesskettenLösungs-Kandidaten
- 605: Vorrichtung zum Bestimmen der möglichen Einsatzmittel
- 606: Vorrichtung zum Bestimmen der bevorzugten Prozessketten-Lösungen
- 607: Vorrichtung zum Auswählen der optimalen Prozesskette
- 608: Vorrichtung zum Auswählen der Einsatzmittel
- 610: Anlage mit Einsatzmitteln *r*₁ - *r*₁₅ zur Herstellung eines neuen Produkts
- *r*₁ - *r*₁₅: Einsatzmittel
- *t_{b}*: Auftrag "Biegen"
- *t_{gr}*: Auftrag "Schleifen"
- *tₕₜ*: Auftrag "Hitzebehandlung"
- *t_{ld}*: Auftrag "Laser-Bohren"
- *tₘ*: Auftrag "Gießen"
- *tₚₐ*: Auftrag "Lackieren/Färben"
- *tₚₒ*: Auftrag "Polieren"
- *tₚᵣ*: Auftrag "Pressen"
- *t_{qc}*: Auftrag "Qualitätskontrolle"
- *tₛ*: Auftrag "Abscheren"
- *t_{w}*: Auftrag "Schweißen"

## Patentansprüche

1. Verfahren (100) zur Herstellung eines neuen Produkts (4) mit einer Anlage (610) mit Einsatzmitteln unter Verwendung einer optimalen Prozesskette (151), wobei folgende Schritte ausgeführt werden:
a) Ermitteln (110) zumindest eines Ziel-Merkmals (111) für das neue Produkt (4),
b) Erfassen (210) von bereits durchgeführten Prozessketten (400, 410, 420) bei der Herstellung von Produkten (1, 2, 3) durch die Anlage,
c) Erzeugen (120) eines zusammengesetzten Prozessketten-Graphs (121) aus dem zumindest einen Ziel-Merkmal (111) und den bereits durchgeführten Prozessketten (400, 410, 420),
d) Erstes Bestimmen (130) von Prozessketten-Lösungs-Kandidaten (131) aus den zusammengesetzten Prozessketten-Graphen (121),
e) Zweites Bestimmen (230) der möglichen Einsatzmittel (231) aus den Prozessketten-Lösungs-Kandidaten (131) und den durchgeführten Prozessketten (400, 410, 420),
f) Drittes Bestimmen (140) der bevorzugten Prozessketten-Lösungen (141) aus den Prozessketten-Lösungs-Kandidaten (131),
g) Erstes Auswählen (150) der optimalen Prozesskette (151) aus den bevorzugten Prozessketten-Lösungen (141),
h) Zweite Auswählen (250) der Einsatzmittel (251) aus der optimalen Prozesskette (151) und den möglichen Einsatzmitteln (231),
i) Herstellen (160) des neuen Produkts (4) durch die Anlage (610).

2. Verfahren nach dem vorhergehenden Anspruch, wobei der zusammengesetzte Prozessketten-Graph (121) ein Gesamt-gewichteter Graph (331) ist.

3. Verfahren nach einem der vorhergehenden Ansprüche, wobei der zusammengesetzte Prozessketten-Graph (121) aus einem Gesamt-1-gewichteten Graph (311) und/oder einem Gesamt-Merkmals-gewichteten Graph (321) abgeleitet wird.

4. Verfahren nach dem vorhergehenden Anspruch, wobei der Gesamt-1-gewichtete Graph (311) aus den bereits durchgeführten Prozessketten (400, 410, 420) ermittelt wird.

5. Verfahren nach dem vorhergehenden Anspruch, wobei der Gesamt-Merkmals-gewichtete Graph (321) aus dem Gesamt-1-gewichteten Graph (311) ermittelt wird, welcher Kanten bevorzugt, die zumindest ein überlappendes Merkmal mit dem zumindest einen Ziel-Merkmal (111) aufweisen.

6. Verfahren nach einem der vorhergehenden Ansprüche, wobei die möglichen Einsatzmittel (231) und/oder die bereits durchgeführten Prozessketten (400, 410, 420) mittels maschinellen Lernens erfasst werden.

7. System (600) zur Herstellung eines neuen Produkts (4) unter Verwendung einer optimalen Prozesskette (151), umfassend
a) eine erste Vorrichtung (601) zum Ermitteln (110) zumindest eines Ziel-Merkmals (111) für das neue Produkt (4),
b) eine zweite Vorrichtung (602) zum Erfassen (210) von bereits durchgeführten Prozessketten (400, 410, 420) bei der Herstellung von Produkten (1, 2, 3) durch eine Anlage (610),
c) eine dritte Vorrichtung (603) zum Erzeugen (120) eines zusammengesetzten Prozessketten-Graphs (121),
d) eine vierte Vorrichtung (604) zum Bestimmen (130) von Prozessketten-Lösungs-Kandidaten (131),
e) eine fünfte Vorrichtung (605) zum Bestimmen (230) der möglichen Einsatzmittel (231),
f) eine sechste Vorrichtung (606) zum Bestimmen (140) der bevorzugten Prozessketten-Lösungen (141),
g) eine siebente Vorrichtung (607) zum Auswählen (150) der optimalen Prozesskette (151),
h) eine achte Vorrichtung (608) zum Auswählen (250) der Einsatzmittel (251),
i) die Anlage (610) mit Einsatzmitteln zur Herstellung des neuen Produkts (4),
wobei das System (600) dazu eingerichtet ist, das Verfahren nach einem der vorhergehenden Ansprüche auszuführen.
